(19) Europäisches Patentamt
European Patent Office
Office européen des brevets

(11) **EP 1 793 794 B1**

(12) **EUROPÄISCHE PATENTSCHRIFT**

(45) Veröffentlichungstag und Bekanntmachung des Hinweises auf die Patenterteilung:
**28.03.2012  Patentblatt 2012/13**

(21) Anmeldenummer: 05789888.4

(22) Anmeldetag: **14.09.2005**

(51) Int Cl.:
*C04B 35/488* (2006.01)        *A61K 6/027* (2006.01)
*C04B 35/18* (2006.01)         *C04B 35/48* (2006.01)

(86) Internationale Anmeldenummer:
**PCT/EP2005/009854**

(87) Internationale Veröffentlichungsnummer:
**WO 2006/032394 (30.03.2006 Gazette 2006/13)**

(54) **DENTALKERAMIK UND VERFAHREN ZU IHRER HERSTELLUNG**

DENTAL CERAMIC AND METHOD FOR THE PRODUCTION THEREOF

CERAMIQUE DENTAIRE ET PROCEDE PERMETTANT DE LA PRODUIRE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.09.2004  DE 102004045752**

(43) Veröffentlichungstag der Anmeldung:
**13.06.2007  Patentblatt 2007/24**

(73) Patentinhaber: **Karlsruher Institut für Technologie**
**76131 Karlsruhe (DE)**

(72) Erfinder:
• **BINDER, Joachim**
  **76227 Karlsruhe (DE)**
• **HAUSSELT, Jürgen**
  **76726 Germersheim (DE)**
• **RITZHAUPT-KLEISSL, Hans-Joachim**
  **69190 Walldorf (DE)**
• **SCHLECHTRIEMEN, Nadja**
  **76351 Linkenheim-Hochstetten (DE)**
• **STOLZ, Stefan**
  **95679 Waldershof (DE)**

(56) Entgegenhaltungen:
**EP-A- 0 631 995      EP-A- 0 690 031**
**EP-A- 1 568 667      DE-U1-202004 005 782**

• **DATABASE WPI Section Ch, Week 200446 Derwent Publications Ltd., London, GB; Class D21, AN 2004-481264 XP002360180 & CN 1 489 988 A (SHANGHAI SILICATE INST CHINESE ACAD SCI) 21. April 2004 (2004-04-21) & CN 1 489 988 A (SHANGHAI SILICATE INST CHINESE ACAD SCI) 21. April 2004 (2004-04-21)**

## Beschreibung

Die Erfindung betrifft eine Dentalkeramik und ein Verfahren zu ihrer, Herstellung.

Keramiken, die sich als Dentalkeramiken für den Einsatz in der Dentaltechnik eignen, müssen besonderen Anforderungen genügen. Dazu gehören insbesondere eine geringe chemische Löslichkeit und eine Farbe, die eine Einfärbung auf dentale Grundfarben oder farbliche Gestaltung mit Malfarben ermöglicht.

Die DIN EN ISO 6872 legt die obere Grenze für die chemische Löslichkeit von Dentalkeramiken auf 100 $\mu g/cm^2$ fest.

Die Charakterisierung der Farbe erfolgt nach dem CIE-L*a*b*-System der Commission Internationale de l'Eclairage (CIE), Wien, 1986. In dieser Systematik beschreiben die Parameter

L* die Helligkeitsempfindung,

a* die Rot-/Grün-Empfindung, wobei a* > 0 eine rote und a* < 0 eine grüne Empfindung und

b* die Gelb-/Blau-Empfindung, wobei b* > 0 eine gelbe und

b* < 0 eine blaue Empfindung

jeweils der Netzhaut des menschlichen Auges bedeutet.

Für vollkeramischen Zahnersatz eignen sich Silikat- oder Oxidkeramiken, wobei sich Oxidkeramiken im Vergleich z. B. zu so genannten Presskeramiken nicht einfach in die gewünschte Form bringen lassen. Aus keramischen Pulvern werden zunächst so genannte *Grünkörper* hergestellt, die anschließend gesintert werden. Beim Sintern der porösen Grünkörper verdichten sich die Pulverpartikel zur festen Keramik, wobei jedoch zwangsläufig eine Schwindung des Volumens von bis zu 50 Prozent auftritt. Dieser Sinterschwund muss bei der Fertigung des keramischen Zahnersatzes jeweils berücksichtigt werden.

Die DE 195 47 129 offenbart ein Verfahren zur schwindungsfreien Herstellung oxidkeramischer Sinterkörper aus einer pulverförmigen Oxidkeramik wie z. B. Zirkoniumdioxid oder Aluminiumoxid, einer pulverförmigen intermetallischen Verbindung und einem siliziumorganischen Polymer. Allerdings führt nicht jede denkbare Zusammensetzung zu einer Keramik, die den oben aufgeführten Anforderungen an eine Dentalkeramik gerecht wird. In der Regel ist die Farbe der mit diesem Verfahren hergestellten Keramiken nicht weiß, sondern grünlich-gelb und ihre chemische Löslichkeit besitzt zu hohe Werte.

Nach J. R. Binder, S. Ray und E. Klose, Schwindungsfreie Keramiken im System Zr-Si-O, DKG Handbuch, Kap. 3.6.4.4., 2002, beruht die Herstellung schwindungsfreier Keramiken im System Zirkonium-SiliziumOxid (Zr-Si-O) auf der Kompensation der beim Sinterprozess unvermeidbar auftretenden Schwindung durch die volumenvergrößernde Oxidationsreaktion von Zirkoniumsiliziden ($ZrySi_x$). Die mechanischen Eigenschaften derartiger reaktionsgesinterter Keramiken hängen dabei wesentlich vom Zr/Si-Verhältnis ab.

Aus H. Salmang und H. Scholze, Keramik, Teil 2: Keramische Werkstoffe, 6. Auflage, 1983, Springer-Verlag, Seite 168-169, ist die Verwendung eines Zusatzes von 0,1 bis 0,5 Gew.% Magnesiumoxid MgO als Sinterhilfsmittel bei der Herstellung von Aluminiumoxid ($Al_2O_3$) bekannt.

Der Produktinformation *New Improved Zirconia Powder* der Fa. Tosoh, Japan, 1999, kann entnommen werden, dass ein Zusatz von 0,25 Gew.% Aluminiumoxid $Al_2O_3$ als Sinterhilfsmittel zu Zirkoniumdioxid die Sintertemperatur um ca. 100°C erniedrigt.

Die DE 20 2004 005 782 U1 offenbart ein Modellmaterial für zahntechnische Zwecke, das eine erste Komponente, die mindestens zwei Metallverbindungen, welche durch eine chemische Reaktion miteinander und/ oder mit einem weiteren Reaktionspartner unter Volumenexpansion umsetzbar ist, enthält, und eine als Bindemittel für die erste Komponente fungierende zweite Komponente aufweist, wobei die erste Komponente eine Mischung aus Zirkoniumdioxid und Zirkoniumdisilicid und die zweite Komponente ein Glaspulver ist. In der ersten Komponente sind hierbei 2 Gewichtsteile Zirkoniumdioxid und 0,3 bis 2 Gewichtsteile Zirkoniumdisilicid, und in der zweiten Komponente 0, 3 bis 1,0 Gewichtsteile Glaspulver vorhanden.

Die CN 1 489 988 A beschreibt eine Zirkoniumdioxid-Dentalkeramik auf Basis von Y/Ce-stabilisiertem TZP, worin $CaO-Al_2O-SiO_2$ im Verhältnis 60-90 Sol.% : 40-10 Vol.% als Sinterhilfsmittel eingesetzt wird.

Die EP 0 690 031 A1 offenbart eine $ZrO_2$-haltige Glaskeramik, die 42,5 bis 58,5 % $SiO_2$, 0 bis 7,0 % $Al_2O_3$, 15,0 bis 28,0 % $ZrO_2$ und 7,0 bis 14,5 % $LiO_2$ als Komponenten enthält.

Aus der EP 0 631 995 A1 ist eine Dentalkeramik, die auf einer Zirkonium und Siliziumoxid-Mischung basiert, mit guten ästhetischen Eigenschaften bekannt.

Ausgehend hiervon ist es die Aufgabe der vorliegenden Erfindung, eine Dentalkeramik und ein Verfahren zu ihrer Herstellung vorzuschlagen, die die genannten Nachteile und Einschränkungen nicht aufweisen. Insbesondere soll eine Dentalkeramik bereitgestellt werden, die sich schwindungsfrei herstellen lässt, die eine geringe chemische Löslichkeit und eine Farbe, die eine Einfärbung auf dentale Grundfarben oder eine farbliche Gestaltung mit Malfarben ermöglicht, aufweist.

Diese Aufgabe wird im Hinblick auf die Dentalkeramik durch die Merkmale des Anspruchs 1 und im Hinblick auf das Verfahren durch den Anspruch 5 gelöst. Die Unteransprüche beschreiben jeweils vorteilhafte Ausgestaltungen der Erfindung.

Ein erfindungsgemäßer oxidkeramischer Sinterkörper umfasst

- Zirkoniumdioxid $ZrO_2$ und Siliziumdioxid $SiO_2$, wobei das Verhältnis zwischen dem Anteil an Zirkonium (Zr) bezogen auf den Anteil an Silizium (Si) (Zr/Si-Verhältnis) einen Wert zwischen 0,5 und 1,0, bevorzugt zwischen 0,7 und 0,9, besonders bevorzugt annähernd 0,8 annimmt, womit sich im besonders bevorzugten Bereich eine Zusammensetzung von 54 Gew.% bis 61 Gew.% Zirkoniumdioxid und 33 Gew.% bis 37 Gew.% Siliziumdioxid ergibt,
- 3 Gew.% bis 12 Ges.%, bevorzugt 3 Gew.% bis 8 Gew.% Aluminiumoxid $Al_2O_3$,
- Magnesiumoxid MgO, bis zu 2 Ges.%, besonders bevorzugt 0,25 Gew.% bis 0,75 Gew.%, insbesondere annähernd 0,4 Gew.% Magnesiumoxid MgO und

wobei sich die genannten Bestandteile jeweils auf insgesamt höchstens 100 Gew.% aufsummieren.

In einer besonderen Ausgestaltung kann der erfindungsgemäße oxidkeramische Sinterkörper zusätzlich noch bis zu 2 Gew.%, bevorzugt 1,5 Gew.% Yttriumoxid $Y_2O_3$, das bei der Herstellung in Form von yttriumstabilisiertem Zirkoniumdioxid $ZrO2$ zugegeben wurde, umfassen.

Die chemische Löslichkeit der erfindungsgemäßen Keramik unterschreitet in einem weiten Bereich den in der DIN EN ISO 6872 einer bevorzugten Ausgestaltung erweist sich die chemische Löslichkeit geringer als 20 $\mu g/cm^2$; besonders bevorzugt sind Werte der chemischen Löslichkeit unterhalb von 10 $\mu g/cm^2$.

Die Farbe der erfindungsgemäßen Keramik ist nahezu weiß und lässt sich daher mit Pigmenten leicht auf die dentalen Grundfarben einfärben. Dieser Beobachtung entsprechen die folgenden bevorzugten Werte für die Parameter L*, a* und b* im L*a*b*-System der Commission Internationale de l'Eclairage (CIE):

- L* nimmt bevorzugt einen Wert zwischen 92 und 96 an, d.h. die Farbe der Keramik wird von der Netzhaut des menschlichen Auges wunschgemäß als hell empfunden und lässt sich durch Zusätze auf die dentalen Grundfarben abdunkeln.
- a* nimmt bevorzugt einen Wert zwischen -2 und +2, besonders bevorzugt zwischen +1,5 und -1,5 an, d.h. die Netzhaut des Auges empfindet die Keramik als weiß. Dieser Farbton lässt sich durch geeignete Pigmente in weitere gewünschte Farbtöne verschieben.
- b* nimmt bevorzugt einen Wert zwischen 0 und 10, besonders bevorzugt zwischen 0 und 4 an, d.h. die Keramik ruft im Auge des Betrachters eine weiße bis höchstens leicht gelbliche Empfindung hervor, was der Einfärbung in die dentalen Grundfarben entgegen kommt.

Die Zugabe von mindestens 1 Gew.% $Al_2O_3$ führt dazu, dass sich die chemische Löslichkeit signifikant erniedrigt, während die Zugabe von mindestens 3 Gew.% $Al_2O_3$ bewirkt, dass die Keramik weiß und nicht mehr gelblich ist. Die Zugabe von Magnesiumoxid MgO dient der Verbesserung des Sinterverhaltens, während die alleinige Zugabe von Aluminiumoxid $Al_2O_3$ zu keiner Verbesserung des Sinterverhaltens führt.

An Stelle von Magnesiumoxid MgO lassen sich auch andere Alkali- oder Erdalkalimetalloxide, wie z. B. Kalziumoxid CaO, in einer für das jeweilige Element spezifischen Konzentration einsetzen, die sich durch Routineversuche leicht ermitteln lassen. Auch beeinflusst der Aluminiumoxidanteil die Eigenschaften der Keramik; dessen Konzentrationseinfluss hängt vom gewählten Alkali- oder Erdalkalimetalloxid ab.

Zur Herstellung einer erfindungsgemäßen Keramik wird zunächst eine homogene Mischung aus monoklinem oder ggf. mit yttriumstabilisiert Zirkoniumdioxid $ZrO_2$, Aluminiumoxid $Al_2O_3$, Magnesiumoxid MgO und Zirkoniumdisilicid $ZrSi_2$, einer siliziumorganischen Verbindung wie Methylpolysiloxan und einem Preßhilfsmittel hergestellt. Aus dieser homogenen Mischung wird dann ein Grünkörper geformt, der bereits die gewünschte Form aufweist oder durch Bearbeitung (z. B. Fräsen) in die gewünschte Form gebracht und der dann durch einen Reaktionssinterprozess zur Dentalkeramik verdichtet (gesintert) wird.

In einer bevorzugten Ausgestaltung werden zu dieser homogenen Mischung zusätzliche geeignete Pigmente zugegeben, die die Dentalkeramik vollständig in der gewünschten Farbe einfärben.

In einer bevorzugten Ausgestaltung zeichnet sich die erfindungsgemäße Keramik dadurch aus, dass sie schwindungsarm bzw. -frei, d.h. dimensions- und formtreu, hergestellt werden kann. Hierzu wird die Dichte $\rho_G$ des Grünkörpers so gewählt, dass die Dichte $\rho_D$ der Dentalkeramik einen Wert von

$$\rho_D = (m_D / m_G) \ \rho_G$$

annimmt, wobei $m_G$ die Masse des Grünkörpers und $m_D$ die Masse der Dentalkeramik ist. Dadurch ist gewährleistet, dass insgesamt kein Sinterschrumpf auftritt.

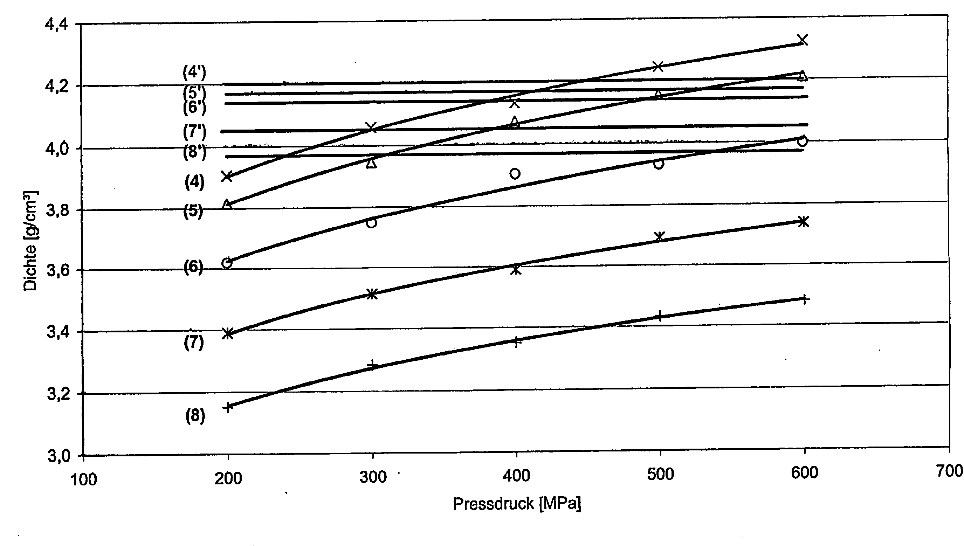

Die Erfindung wird im Folgenden anhand der drei Ausführungsbeispiele und der Figur näher erläutert.

**Ausführungsbeispiel 1**

Zur Herstellung erfindungsgemäßer Dentalkeramiken wurde der Grünkörper, bestehend aus Zirkoniumdisilicid, monoklinem Zirkoniumdioxid, Magnesiumoxid, Aluminiumoxid, Methylpolysiloxan und einem organischen Presshilfsmittel, durch einen Reaktionssinterprozess zur Keramik verdichtet, wobei diese dichte zirkonbasierte Keramik ein Zr/Si-Verhältnis von 0,8 aufwies. Der Anteil an Magnesiumoxid betrug 0,4 Gew.%, während der Anteil an Aluminiumoxid zwischen 0 bis 16 Gew.% variiert wurde. Hierdurch ergaben sich folgende Keramiken:

| Nr. | Zusammensetzung der Keramik [Gew.%] | | | | Chemische Löslichkeit [$\mu$g/cm$^2$] | Farbmessung (CIE-L*a*b*-System) | | |
|---|---|---|---|---|---|---|---|---|
| | ZrO$_2$ | SiO$_2$ | Al$_2$O$_3$ | MgO | | L* | a* | b* |
| 1 | 61,9 | 37, 8 | 0,0 | 0, 4 | 11,0 | 93,8 | -3,9 | 8,0 |
| 2 | 61,7 | 37,6 | 0,4 | 0,4 | 67,3 | 88,1 | -3,1 | 6,5 |
| 3 | 60,5 | 36,9 | 2,3 | 0,4 | 3,6 | 92,4 | -6,3 | 9,1 |
| 4 | 59,5 | 36,3 | 3, 8 | 0,4 | 5,7 | 95,0 | -1,3 | 3,1 |
| 5 | 58,6 | 35,7 | 5,4 | 0,4 | 5,8 | 95,2 | -1,3 | 3,3 |
| 6 | 57,1 | 34,8 | 7,8 | 0,4 | 8,2 | 94,4 | -1,0 | 3,7 |
| 7 | 54,5 | 33,2 | 11,9 | 0,4 | 7,5 | 95,5 | -0,9 | 3,1 |
| 8 | 51,9 | 31,6 | 16,1 | 0,4 | 8,3 | 95,9 | -0,9 | 3,3 |

Zusätzlich wurden für die Dentalkeramiken Nr. 4 bis Nr. 8 die Sinterdichten $\rho_D$ der Dentalkeramiken, die Massenänderungen

$$\Delta m \;=\; (m_D \,/m_G) - 1$$

sowie die Gründichten $\rho_G$ bei einem axialen Pressdruck während der Grünkörper-Herstellung zwischen 200 MPa und 600 MPa bestimmt. Gemäß der Beziehung

$$\Delta V \;=\; (1 + \Delta m) \cdot (\rho_G / \rho_D) - 1$$

wurde hieraus die entsprechende Volumenänderung $\Delta V$ ermittelt:

| Nr. | $\rho_D$ [g/cm$^3$] | $\Delta m$ [%] | Pressdruck 200 MPa | | Pressdruck 600 MPa | |
|---|---|---|---|---|---|---|
| | | | $\rho_G$ [g/cm$^2$] | $\Delta V$ [%] | $\rho_G$ [g/cm$^2$] | $\Delta V$ [%] |
| 4 | 4,20 | 28,6 | 3,04 | -7,0 | 3,36 | 3,0 |
| 5 | 4,17 | 27,4 | 2,99 | -8,5 | 3,30 | 0,9 |
| 6 | 4,14 | 25,4 | 2,89 | -12,6 | 3,19 | -3,4 |
| 7 | 4,05 | 23,3 | 2,75 | -16,3 | 3,03 | -7,7 |
| 8 | 3,97 | 21,0 | 2,60 | -20,7 | 2,88 | -12,3 |

In der Figur sind als Kurven **4'**, **5'** ... **8'** die Sinterdichten $\rho_D$ in g/cm$^3$ der Keramiken Nr. 4 bis Nr. 8 und als Kurven **4**, **5** ... **8** der Wert $(1+\Delta m)\cdot\rho_G$ in g/cm$^3$ der Keramiken Nr. 4 bis Nr. 8 beim angegebenen axialen Pressdruck in MPa während der Grünkörper-Herstellung aufgetragen. Schwindungsfreiheit der Keramik tritt dann auf, wenn sich die jeweils zusammengehörenden Kurven **4'** und **4**, **5'** und **5** usw. schneiden. Diese Bedingung wird von den Keramiken Nr. 4 bis Nr. 6 erfüllt. Während die Schnittpunkte für die Keramiken Nr. 4 und Nr. 5 direkt der Figur entnommen werden können, ist für die Keramik Nr. 6 ein höherer Pressdruck als 600 MPa erforderlich. Ebenfalls noch als Dentalkeramik geeignet sind die Keramiken Nr. 3 und Nr. 7.

**Ausführungsbeispiel 2**

Zur Herstellung erfindungsgemäßer Dentalkeramiken wurde der Grünkörper, bestehend aus Zirkoniumdisilicid, yttriumstabilisiertem Zirkoniumdioxid (3 mol.% $Y_2O_3$), Magnesiumoxid, Aluminiumoxid, Methylpolysiloxan und einem organischen Presshilfsmittel, durch einen Reaktionssinterprozess zur Keramik verdichtet, wobei diese dichte zirkonbasierte Keramik ein Zr/Si-Verhältnis von 0,8 aufwies. Der Anteil an Magnesiumoxid betrug 0,4 Gew.%, während der Anteil an Aluminiumoxid zwischen 0 bis 5,4 Gew.% variiert wurde. Es ergaben sich folgende Keramiken:

| Nr. | Zusammensetzung der Keramik [Gew.%] | | | | | Chem. Löslichkeit [$\mu$g/cm$^2$] | Farbmessung (CIE-L*a*b*) | | |
|---|---|---|---|---|---|---|---|---|---|
| | ZrO$_2$ | SiO$_2$ | Al$_2$O$_3$ | MgO | Y$_2$O$_3$ | | L* | a* | b* |
| 9 | 60,4 | 37,7 | 0,0 | 0,4 | 1,5 | 18,3 | 92,3 | -5,3 | 13,5 |
| 10 | 60,2 | 37,6 | 0,4 | 0,4 | 1,5 | 118,0 | 92,8 | -4,5 | 10,4 |
| 11 | 59,0 | 36,9 | 2,3 | 0,4 | 1,5 | 46,4 | 91,3 | -9,0 | 14,7 |
| 12 | 58,1 | 36,3 | 3,8 | 0,4 | 1,4 | 35,7 | 95,3 | -2,3 | 5,0 |
| 13 | 57,1 | 35,7 | 5,4 | 0, 4 | 1,4 | 44,6 | 95,8 | -1,2 | 3,0 |

**Ausführungsbeispiel 3**

Die Herstellung erfindungsgemäßer Dentalkeramiken erfolgte wie in Ausführungsbeispiel 1, wobei hier zum Vergleich der Anteil an Magnesiumoxid 1,1 bzw. 1,2 Gew.% betrug. Hierdurch ergaben sich folgende Keramiken, wobei die Werte der Keramiken Nr. 3 und Nr. 5 dem Ausführungsbeispiel 1 entnommen sind:

| Nr. | Zusammensetzung der Keramik [Gew.%] | | | | Chem. Löslichkeit [$\mu$g/cm$^2$] | Farbmessung (CIE-L*a*b*-System) | | |
|---|---|---|---|---|---|---|---|---|
| | ZrO$_2$ | SiO$_2$ | Al$_2$O$_3$ | MgO | | L* | a* | b* |
| 3 | 60,5 | 36,9 | 2, 3 | 0,4 | 3,6 | 92,4 | -6,3 | 9,1 |
| 5 | 58,6 | 35,7 | 5,4 | 0,4 | 5,8 | 95,2 | -1, 3 | 3,3 |
| 14 | 60,0 | 36,6 | 2,3 | 1,1 | 3,7 | 92,0 | -6,2 | 11,2 |
| 15 | 58,1 | 35,4 | 5,4 | 1,2 | 4,4 | 95,0 | -3,2 | 6,5 |

**Patentansprüche**

1.   Dentalkeramik, umfassend

- Zirkoniumdioxid und Siliziumdioxid,
wobei das Verhältnis zwischen dem Anteil an Zirkonium bezogen auf den Anteil an Silizium (Zr/Si-Verhältnis) einen Wert zwischen 0,5 und 1,0 annimmt,
- 3 Gew.% bis 12 Gew.% Aluminiumoxid und
- Magnesiumoxid, davon bis zu 2 Gew.%.

2.   Dentalkeramik nach Anspruch 1 mit
einem Zr/Si-Verhältnis von annähernd 0,8,
54 Gew.% bis 61 Gew.% Zirkoniumdioxid und
33 Gew.% bis 37 Gew.% Siliziumdioxid.

3.   Dentalkeramik nach Anspruch 2 mit
3 Gew.% bis 8 Gew.% Aluminiumoxid und
0,25 Gew.% bis 0,75 Gew.% Magnesiumoxid.

**4.** Dentalkeramik nach einem der Ansprüche 1 bis 3 mit einem nach dem CIE-L*a*b*-System für die Farbmessung definierten a*-Wert für die Rot-/Grün-Empfindung der Netzhaut zwischen -2 und +2 und einem b*-Wert für die Gelb-/Blau-Empfindung der Netzhaut zwischen 0 und 10.

**5.** Verfahren zur Herstellung einer Dentalkeramik nach einem der Ansprüche 1 bis 4, bei dem

a) eine homogene Mischung aus Zirkoniumdioxid und Zirkoniumdisilicid, wobei das Zr/Si-Verhältnis der Mischung zwischen 0,5 und 1,0 liegt, 3 Gew.% bis 12 Gew.% Aluminiumoxid, Magnesiumoxid und einer siliziumorganischen Verbindung hergestellt,
b) aus der homogenen Mischung ein Grünkörper geformt und
c) der so geformte Grünkörper zur Dentalkeramik gesintert wird.

**6.** Verfahren nach Anspruch 5, bei dem der Grünkörper durch Fräsen in die gewünschte Form gebracht wird.

**7.** Verfahren nach Anspruch 5 oder 6, bei dem die homogene Mischung zusätzliche Pigmente umfasst.

**8.** Verfahren nach einem der Ansprüche 5 bis 7, bei dem die Dichte $\rho_G$ des Grünkörpers so gewählt wird, dass die Dichte $\rho_D$ der Dentalkeramik einen Wert von

$$\rho_D = (m_D / m_G) \, \rho_G$$

annimmt, wobei $m_G$ die Masse des Grünkörpers und $m_D$ die Masse der Dentalkeramik ist und wobei die Dichte $\rho_G$ des Grünkörpers bei einem axialen Pressdruck zwischen 200 MPa und 600 MPa bestimmt wird.

**Claims**

**1.** Dental ceramic, containing

- zirconium dioxide and silicon dioxide, with a Zr/Si ratio ranging from 0.5 to 1.0,
- 3% to 12% by weight of aluminium oxide and
- up to 2% by weight of magnesium oxide.

**2.** Dental ceramic according to claim 1 with
a Zr/Si ratio of about 0.8,
54% to 61% by weight of zirconium dioxide and
33% to 37% by weight of silicon dioxide.

**3.** Dental ceramic according to claim 2 with
3% to 8% by weight of aluminium oxide and
0.25% to 0.75% by weight of magnesium oxide.

**4.** Dental ceramic according to any one of the claims 1 to 3 with an a* value, defined according to the CIE L*a*b* system for colour measurement, for the red/green sensation of the retina between -2 and +2 and a b* value for the yellow/blue sensation of the retina between 0 and 10.

**5.** Method for the production of a dental ceramic according to one of the claims 1 to 4, in which

a. a homogeneous mixture is made of zirconium dioxide and zirconium disilicide, wherein the Zr/Si ratio of the mixture ranges from 0.5 to 1.0, with 3% to 12% by weight of aluminium oxide, magnesium oxide and an organosilicon compound,
b. a green body is formed from the homogeneous mixture and
c. the green body thus formed is sintered to become the dental ceramic.

**6.** Method according to claim 5, in which the green body is made into the desired shape, by milling.

**7.** Method according to claim 5 or 6, in which the homogeneous mixture contains additional pigments.

**8.** Method according to any one of the claims 5 to 7, in which the density $\rho_G$ of the green body is selected such that the density $\rho_D$ of the dental ceramic takes a value of

$$\rho_D = (m_D / m_G)\ \rho_G$$

wherein $m_G$ is the mass of the green body and $m_D$ is the mass of the dental ceramic and wherein the density $\rho_G$ of the green body is determined at an axial pressing force ranging from 200 MPa to 600 MPa.

**Revendications**

**1.** Céramique dentaire renfermant :

- du dioxyde de zirconium et du dioxyde de silicium, le rapport entre la proportion de zirconium et la proportion de silicium (rapport Zr/Si) ayant une valeur comprise entre 0,5 et 1,0,
- 3 à 12 % en poids d'oxyde d'aluminium, et
- de l'oxyde de magnésium en proportion de jusqu'à 2 % en poids.

**2.** Céramique dentaire conforme à la revendication 1, présentant un rapport Zr/Si d'environ 0,8 et renfermant :

54 à 61 % en poids de dioxyde de zirconium, et
33 à 37 % en poids de dioxyde de silicium.

**3.** Céramique dentaire conforme à la revendication 2, renfermant :

3 à 8 % en poids d'oxyde d'aluminium, et
0,25 à 0,75 % en poids d'oxyde de magnésium.

**4.** Céramique dentaire conforme à l'une des revendications 1 à 3, présentant une valeur a* pour la sensation rouge/vert de la rétine comprise entre -2 et +2 et une valeur b* pour la sensation jaune/bleu de la rétine comprise entre 0 et 10 définies pour la mesure de la couleur selon le système CIE-L*a*b*.

**5.** Procédé d'obtention d'une céramique dentaire conforme à l'une des revendications 1 à 4, selon lequel

a) on prépare un mélange homogène de dioxyde de zirconium et de di-siliciure de zirconium, le rapport Zr/Si de ce mélange étant compris entre 0,5 et 1,0, renfermant 3 à 12 % en poids d'oxyde d'aluminium, de l'oxyde de magnésium et un composé organique de silicium,
b) on forme un corps vert à partir de ce mélange homogène, et
c) on fritte le corps vert ainsi formé pour obtenir la céramique dentaire.

**6.** Procédé conforme à la revendication 5, selon lequel le corps vert est mis en forme à la forme souhaitée par fraisage.

**7.** Procédé conforme à la revendication 5 ou 6, selon lequel le mélange homogène renferme en outre des pigments.

**8.** Procédé conforme à l'une des revendications 1 à 7, selon lequel la densité $\rho_G$ du corps vert est choisie de sorte que la densité $\rho_D$ de la céramique dentaire présente une valeur

$$\rho_D = (m_D/m_G)\ \rho_G,$$

$m_G$ étant la masse du corps vert et $m_D$ la masse de la céramique dentaire, et la densité $\rho_G$ du corps vert étant déterminée avec une pression de compression comprise entre 200 MPa et 600 MPa.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19547129
- DE 202004005782 U1
- CN 1489988 A
- EP 0690031 A1
- EP 0631995 A1

**In der Beschreibung aufgeführte Nicht-Patentliteratur**

- **NACH J. R. BINDER ; S. RAY ; E. KLOSE.** Schwindungsfreie Keramiken im System Zr-Si-O. 2002
- **H. SALMANG ; H. SCHOLZE.** Keramik, Teil 2: Keramische Werkstoffe. Springer-Verlag, 1983, 168-169